# EUROPEAN PATENT SPECIFICATION

(11) **EP 3 288 154 B1**
(45) Date of publication and mention of the grant of the patent: **02.01.2019**
(21) Application number: 17187356.5
(22) Date of filing: 22.08.2017
(51) Int. Cl.: H02J 50/60, H02J 50/80, H02J 7/02

(54) **POWER FEED DEVICE AND POWER RECEIVING DEVICE**
POWER FEED VORRICHTUNG UND LEISTUNG EMPFANGSVORRICHTUNG
DISPOSITIF D'ALIMENTATION ÉLECTRIQUE ET DISPOSITIF DE RÉCEPTION D'ÉNERGIE

(30) Priority: 24.08.2016 JP 2016164156
(43) Date of publication of application: 28.02.2018
(73) Proprietor: Funai Electric Co., Ltd., Daito, Osaka, 574-0013 (JP)
(72) Inventor: NOBATA, Yukikazu, Daito, Osaka 574-0013 (JP)
(74) Representative: Global IP Europe Patentanwaltskanzlei

(56) References cited:
- EP-A1- 2 879 269
- US-A1- 2011 221 388
- US-A1- 2012 115 549
- US-A1- 2012 205 988
- US-A1- 2014 292 095

## Description

This application claims priority to Japanese Patent Application No. 2016-164156 filed on August 24, 2016.

### BACKGROUND

### Field of the Invention

The present invention generally relates to a power feed device and a power receiving device.

### Background Information

Non-contact charging systems have been developed in recent years as devices that charge portable electronic devices (see JP 2013-198050 A, for example). With this non-contact charging systems, portable telephones, smart phones, and other such portable electronic devices can be charged in non-contact fashion, without connecting directly to a charger with a cable or the like.

With the charging system in accordance with JP 2013-198050 A, when a portable electronic device is placed on a charger, power is sent via electromagnetic waves from the charger to the portable electronic device.

The US 2012/205988 A1 discloses a power feed device configured to feed power to a power receiving device using a magnetic field, the power feed device comprising: a coil configured to generate the magnetic field; a first communication component configured to communicate with the power receiving device; and a controller configured to control generation of the magnetic field.

### SUMMARY

Recent years have seen an increase in the number of users who put an IC card or other such non-contact card into the case of a portable electronic device that can be charged with a wireless charging system. If the card is still inside the case when the portable electronic device is charged with the wireless charger, there is the risk that the card will be damaged by electromagnetic waves from the charger.

One object of the present disclosure is to provide a power feed device and a power receiving device with which damage to a card when power is fed to a power receiving device can be prevented.
[1] In view of the state of the know technology and in accordance with a first aspect, a power feed device is configured to feed power to a power receiving device using a magnetic field. The power feed device includes a coil, a first communication component, and a controller. The coil is configured to generate the magnetic field. The first communication component is configured to communicate with the power receiving device. The controller is configured to control generation of the magnetic field based on a card information. For example, the card information can be indicative of a card detection of the power receiving device.
   With this configuration, the power feed device does not feed power to the power receiving device if a card is near the power receiving device, for example. Thus, damage to the card when power is fed to the power receiving device can be prevented.
[2] In accordance with a preferred embodiment according to the power feed device mentioned above, the first communication component is configured to receive the card information from the power receiving device. For example, the card information can be a card detection information (e.g., specific information on a card) about the card detection.
   In accordance with a preferred embodiment according to any one of the power feed devices mentioned above, the controller is configured to control the generation of the magnetic field based on the card information.
   In accordance with a preferred embodiment according to any one of the power feed devices mentioned above, the controller is configured to restrict the generation of the magnetic field based on the card information. For example, the controller does not generate the magnetic field based on the card information (card detection information).
   With this configuration, if a card is near the power receiving device, then the power feed device will not generate a magnetic field. Thus, no power is fed to the power receiving device. Therefore, damage to the card when power is fed to the power receiving device can be prevented. Also, the configuration can be such that the first communication component receives the card information (card detection information) from the power receiving device, and such that the controller does not generate the magnetic field based on the card information (card detection information), for example. With this configuration, the power feed device receives from the power receiving device the card information (card detection information) about whether or not a card is near the power receiving device, for example. Thus, damage to the card can be prevented with a simple configuration, without adding anything new to the configuration of an existing power feed device.
   In accordance with a preferred embodiment according to any one of the power feed devices mentioned above, the controller is configured to execute the generation of the magnetic field while the card information is indicating that a card has not been detected.
[3] In accordance with a preferred embodiment according to any one of the power feed devices mentioned above, the controller is configured to prevent the generation of the magnetic field while the card information is indicating that a card has been detected.
[4] In accordance with a preferred embodiment according to any one of the power feed devices mentioned above, the first communication component is configured to receive modulated signal modulated based on the card information. For example, the first communication component can receive modulated signal modulated based on the card detection of the power receiving device (e.g., based on specific information on a card).
   With this configuration, whether or not a card is near the power receiving device can be detected by receiving a signal of the usage frequency of the card outputted from the power receiving device for the purpose of detecting a card. Therefore, card damage can be prevented with a simple configuration, without having to provide a separate communication device for communication between the power feed device and power receiving device.
   In accordance with a preferred embodiment according to any one of the power feed devices mentioned above, the controller is configured to control the generation of the magnetic field based on the modulated signal.
[5] In accordance with a preferred embodiment according to any one of the power feed devices mentioned above, the controller is configured to restrict the generation of the magnetic field based on the modulated signal.
   In accordance with a preferred embodiment according to any one of the power feed devices mentioned above, the controller is configured to execute the generation of the magnetic field while the modulated signal is indicating that a card has not been detected.
[6] In accordance with a preferred embodiment according to any one of the power feed devices mentioned above, the controller is configured to prevent the generation of the magnetic field while the modulated signal is indicating that a card has been detected.
[7] In accordance with a preferred embodiment according to any one of the power feed devices mentioned above, the power feed device further includes a power feeder configured to drive the coil, and a first switching component configured to switch a connection to the coil between the power feeder and the first communication component.
   With this configuration, the first communication component can be prevented from being damaged by high-output power sent from the power feed device to the power receiving device during power feed.
[8] In accordance with a preferred embodiment according to any one of the power feed devices mentioned above, the power feed device includes an output component configured to output a notification based on the card information (e.g., the card detection of the power receiving device). For example, the output component can announce the detection of the card.
   With this configuration, the user can be apprised by sound that the card is near the power receiving device.
[9] In view of the state of the know technology and in accordance with a second aspect, a power receiving device is configured to be fed power from a power feed device using a magnetic field. The power receiving device includes a power receiver, a coil, an impedance detector, and a second communication component. The power receiver is configured to receive the magnetic field. The coil is configured to transmit a signal based on a resonant frequency of a card. The impedance detector is configured to detect the card based on a change in an impedance of the coil. The second communication component is configured to communicate with the power feed device based on a card information. For example, the card information can be indicative of a card detection by the impedance detector. Also, for example, the second communication component can communicate the card information (card detection information) with any one of the power feed devices mentioned above.
   With this configuration, any one of the power feed devices receives from the power receiving device the card information (card detection information) about whether or not a card is near the power receiving device, for example. Thus, damage to the card can be prevented with a simple configuration, without adding anything new to the configuration of an existing power feed device.
[10] In accordance with a preferred embodiment according to the power receiving device mentioned above, the second communication component is configured to transmit the card information to the power feed device. For example, the card information can be a card detection information about the card detection to the power feed device.
[11] In accordance with a preferred embodiment according to any one of the power receiving devices mentioned above, the second communication component is configured to modulate the signal of the resonant frequency of the card based on the card information. For example, the second communication component can modulate the signal of the resonant frequency of the card based on the card detection (e.g., specific information about the card).
   With this configuration, the power receiving device sends the power feed device the card information (card detection information) about whether or not a card is near the power receiving device, for example. This information can be superposed over a usage frequency signal of the card that is outputted for the purpose of detecting the card. Therefore, card damage can be prevented with a simple configuration, without having to provide a separate communication device for communication between the power feed device and the power receiving device.
[12] In accordance with a preferred embodiment according to any one of the power receiving devices mentioned above, the power receiving device includes a communication controller configured to restrict output of the second communication component based on the card information (card detection). For example, the communication controller can reduce the output of the second communication component based on the the card detection (e.g., specific information).
   With this configuration, the card information (card detection information) or the signal sent from the power receiving device is communicated at a relatively low power level, for example. It is less likely that the card will be damaged. Also, the power feed device stops a beacon and feeds the power only when the power receiving device is near. Thus, the power feed can be carried out more efficiently.
[13] In accordance with a preferred embodiment according to any one of the power receiving devices mentioned above, the power receiving device further includes a second switching component configured to switch a connection to the coil between the power receiver and the second communication component.
   With this configuration, the second communication component can be prevented from being damaged by high-output power sent from the power feed device to the power receiving device during power feed.
[14] In accordance with a preferred embodiment according to any one of the power receiving devices mentioned above, the coil is configured to intermittently transmit the signal.
[15] In accordance with a preferred embodiment according to any one of the power receiving devices mentioned above, the power receiving device further includes a rechargeable battery configured to be charged based on the magnetic field received by the power receiver.

With the present invention, when a power receiving device is fed power from a power feed device, damage to a card disposed near the power receiving device can be prevented.

### BRIEF DESCRIPTION OF THE DRAWINGS

Referring now to the attached drawings which form a part of this original disclosure:
FIG. 1 is a schematic diagram of an example of the usage state of a power feed device and a power receiving device in accordance with a first embodiment;
FIG. 2A is a block diagram of the configuration of the power feed device in accordance with the first embodiment;
FIG. 2B is a block diagram of the configuration of the power receiving device in accordance with the first embodiment;
FIG. 3 is a schematic diagram of the card detection state of the power receiving device in accordance with the first embodiment;
FIG. 4 is a circuit diagram of the configuration of an impedance detector in the power receiving device in accordance with the first embodiment;
FIG. 5A is a schematic diagram of the communication state between the power feed device and the power receiving device in accordance with the first embodiment;
FIG. 5B is a schematic diagram of the communication state between the power feed device and the power receiving device in accordance with the first embodiment;
FIG. 6 is a schematic diagram of the power feed state from the power feed device to the power receiving device in accordance with the first embodiment;
FIG. 7 illustrates time charts (simplified) showing the operation of the power feed device;
FIG. 8 illustrates time charts showing the transition in operation between the power feed device and the power receiving device when no card is near the power receiving device;
FIG. 9 illustrates time charts showing the transition in operation between the power feed device and the power receiving device when a card is near the power receiving device;
FIG. 10 is a block diagram of the configuration of a power receiving device in accordance with a second embodiment;
FIG. 11 illustrates time charts showing the transition in operation between a power feed device and the power receiving device when no card is near the power receiving device;
FIG. 12A is a block diagram of the configuration of a power feed device in accordance with a third embodiment;
FIG. 12B is a block diagram of the configuration of a power receiving device in accordance with the third embodiment;
FIG. 13A is a block diagram of the configuration of a power feed device in accordance with a fourth embodiment;
FIG. 13B is a block diagram of the configuration of a power receiving device in accordance with the fourth embodiment;
FIG. 14A is a schematic diagram of the communication state between the power feed device and the power receiving device in accordance with the first embodiment;
FIG. 14B is a schematic diagram of the communication state between the power feed device and the power receiving device in accordance with the fourth embodiment;
FIG. 15 is a schematic diagram of the power feed state from the power feed device to the power receiving device in accordance with the fourth embodiment;
FIG. 16 illustrates time charts showing the transition in operation between the power feed device and the power receiving device when no card is near the power receiving device;
FIG. 17 illustrates time charts showing the transition in operation between the power feed device and the power receiving device when a card is near the power receiving device;
FIG. 18A is a block diagram of the configuration of a power feed device in accordance with a fifth embodiment;
FIG. 18B is a block diagram of the configuration of a power receiving device in accordance with the fifth embodiment;
FIG. 19 illustrates time charts showing the transition in operation between the power feed device and the power receiving device when no card is near the power receiving device;
FIG. 20A is a block diagram of the configuration of a power feed device in accordance with a sixth embodiment;
FIG. 20B is a block diagram of the configuration of a power receiving device in accordance with the sixth embodiment; and
FIG. 21 illustrates time charts showing the transition in operation between a power feed device and a power receiving device in accordance with a seventh embodiment.

### DETAILED DESCRIPTION OF PREFERRED EMBODIMENTS

Embodiments of the present invention will now be described through reference to the drawings. The embodiments described below are all specific, preferred examples of the present invention. The numerical values, shapes, materials, constituent elements, layout positions and connection modes of the constituent elements, steps, order of steps, and so forth given in the following embodiments are all just examples, and are not intended to limit the present invention. The present invention is specified by the claims. Thus, of the constituent elements in the following embodiments, those not mentioned in an independent claim are not necessarily needed to achieve the object of the present invention, but will be described as constituting a preferred embodiment.

### FIRST EMBODIMENT

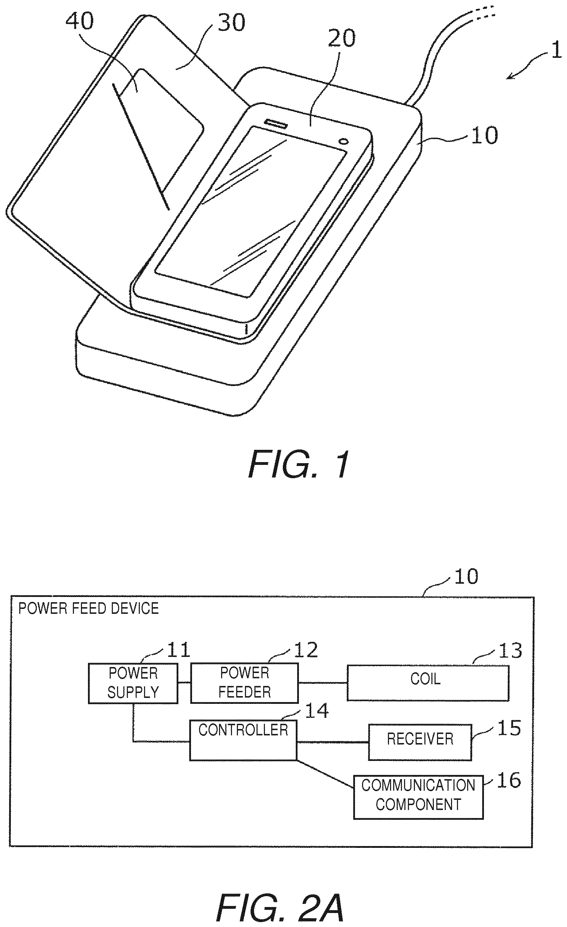

The power feed device in accordance with a first embodiment will now be described through reference to FIGS. 1 to 8.

### Configuration of Power Feed Device and Power Receiving Device

First, the configuration of a power feed device 10 and a power receiving device 20 in accordance with this embodiment will be described. FIG. 1 is a schematic diagram of an example of the usage state of a power feed device 10 in accordance with this embodiment. In FIG. 1, the power feed device 10 and the power receiving device 20 collectively constitute a non-contact power feed system 1.

As shown in FIG. 1, the power feed device 10 is a charger with which power can be supplied in non-contact fashion to the power receiving device 20 wirelessly, by placing the power receiving device 20, without connecting the power receiving device 20 directly to the power feed device 10 with a cable or the like. The power receiving device 20 is a device equipped with a power reception function, such as a portable electronic device.

With the power feed device 10, when the power receiving device 20 is put in a case 30 and a non-contact card 40 is put into the case 30, the card 40 can be prevented from being damaged in the event that the user accidentally places the power receiving device 20 on the power feed device 10.

FIG. 2A is a block diagram of the configuration of the power feed device 10 in accordance with this embodiment.

As shown in FIG. 2A, the power feed device 10 includes a power supply 11, a power feeder 12, a coil 13, a controller 14, a receiver 15, and a communication component 16.

The power supply 11 supplies electrical power to the entire power feed device 10.

The power feeder 12 is a power feed circuit that produces high-frequency feed power for supply to the power receiving device 20.

The coil 13 serves as an antenna for radiating the power produced by the power feeder 12 as a magnetic field.

The controller 14 senses the state (current, voltage, output, temperature, etc.) of the power feeder 12 and serves to control the power feed device 10 based on various information sent from the power receiving device 20. In the illustrated embodiment, the controller 14 controls power feed, that is, the generation of a magnetic field from the coil 13, based on specific information about the card 40 (e.g., card information or card detection information), as will be discussed below. Alternatively, the controller 14 does not generate a magnetic field from the coil 13 based on the specific information about the card 40. More specifically, the controller 14 controls the timing at which power is fed to the power receiving device 20, the power feed duration, the power feed amount, and so forth, for example. The controller 14 is an electronic controller that includes a microcomputer or a processor (processing circuit). The controller 14 can also include other conventional components such as an input interface circuit, an output interface circuit, and storage devices such as a ROM (Read Only Memory) and a RAM (Random Access Memory), as needed and/or desired.

The receiver 15 is a reception circuit for receiving a signal transmitted from the power receiving device 20. The signal transmitted from the power receiving device 20 includes the specific information such as information about whether or not there is a card 40, and the like. Specifically, in the illustrated embodiment, the specific information indicates whether or not there is a card 40 near the power receiving device 20 (i.e., presence or absence of the card 40 near the power receiving device 20).

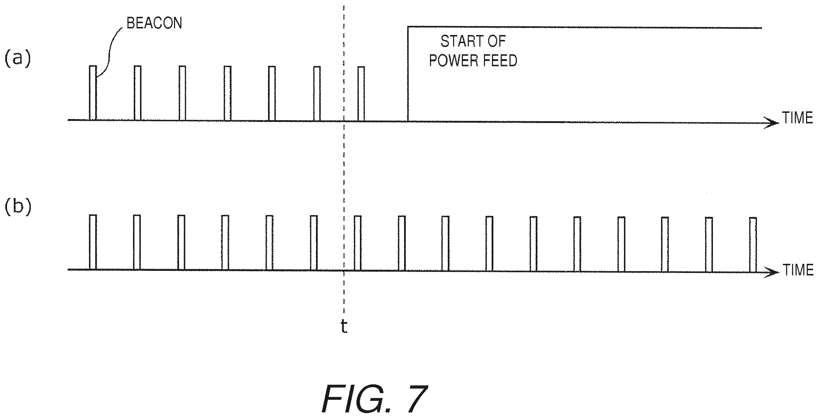

The communication component 16 is the first communication component in the present disclosure. The communication component 16 communicates information such as the power reception state with the power receiving device 20. The communication component 16 transmits a beacon for detecting the power receiving device 20. "Beacon" here refers to a magnetic field sent out in pulse form at low output and for a short time, as shown in FIG. 7 (discussed in detail below). Also, the communication component 16 can receive a modulated beacon. That is, in this case, the communication component 16 receives specific information from the power receiving device 20, specifically, information about whether or not there is a power receiving device 20 near the communication component 16. Also, the communication component 16 can receive a modulated beacon based on the specific information about the card 40. The communication component 16 can include a transmitter and/or receiver. In the illustrated embodiment, the specific information can also include other information, such as a type of the card 40, as needed and/or desired.

Communication between the power feed device 10 and the power receiving device 20 (between the communication component 16 and a communication component 26) can be accomplished, for example, by using a wireless LAN, Bluetooth (registered trademark), or the like having a frequency that is distinct from that of the power feed. Also, the communication between the power feed device 10 and the power receiving device 20 can employ a communication method in which the magnetic field is modulated and a signal that has undergone load modulation is received by the power receiving device 20.

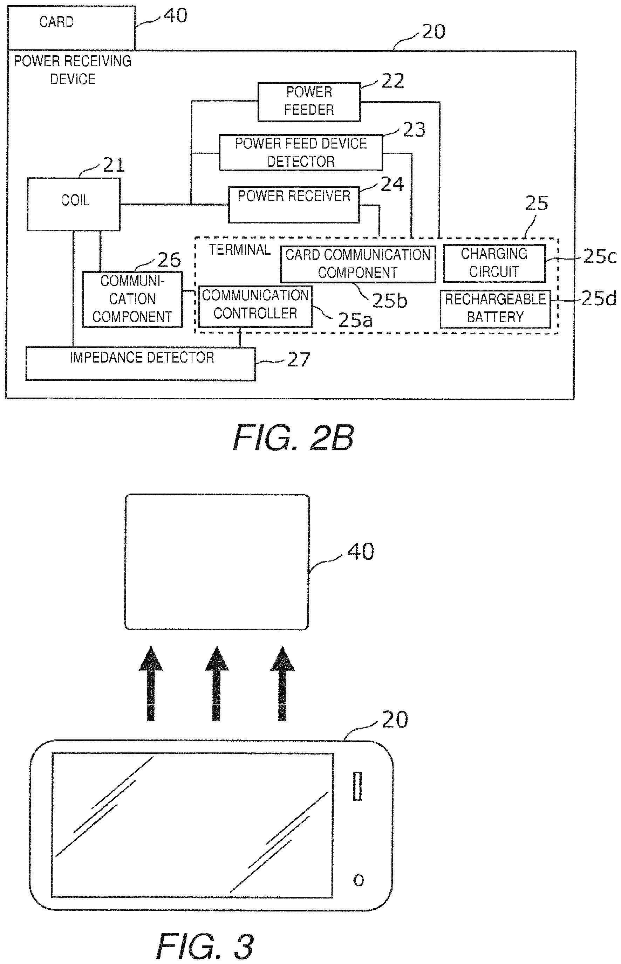

FIG. 2B is a block diagram of the configuration of the power receiving device 20 in accordance with this embodiment.

As shown in FIG. 2B, the power receiving device 20 includes a coil 21, a power feeder 22, a power feed device detector 23, a power receiver 24, a terminal 25, a communication component 26, and an impedance detector 27.

The coil 21 serves as an antenna that receives high-frequency power feed (that is, a magnetic field) sent out by the power feed device 10.

The power feeder 22 is a power feed circuit for transmitting various information from the power receiving device 20 to the power feed device 10. For example, a signal corresponding to the frequency of the card 40 is sent from a card communication component 25b (described below), through the coil 21, to the card 40. Also, when the power feed device 10 is notified that the card 40 is near the power receiving device 20, the specific information related to the presence of the card 40 can be sent from the power feeder 22 through the coil 21.

The power feed device detector 23 is a circuit that detects a signal received from the power feed device 10, and detects that the power feed device 10 is near the power receiving device 20. The power feed device detector 23 detects a beacon sent from the power feed device 10, for example.

The power receiver 24 receives the magnetic field from the power feed device 10. That is, the power receiver 24 is a circuit that receives high-frequency power from the power feed device 10. Also, the power receiver 24 has a circuit that converts the high-frequency power received from the power feed device 10 into DC power so that it can be used inside the power receiving device 20.

The terminal 25 is a portion having that functions of the power receiving device 20 as a portable electronic device. The terminal 25 includes a communication controller 25a, the card communication component 25b, a charging circuit 25c, and a rechargeable battery 25d.

The communication controller 25a is operated to control the overall operation of the terminal 25, that is, to make the power receiving device 20 function as a portable electronic device. The communication controller 25a also controls the operation of the impedance detector 27 (described below). The communication controller 25a is an electronic controller that includes a microcomputer or a processor (processing circuit). The communication controller 25a can also include other conventional components such as an input interface circuit, an output interface circuit, and storage devices such as a ROM (Read Only Memory) and a RAM (Random Access Memory), as needed and/or desired.

The card communication component 25b is a communication circuit for communicating wirelessly with the card 40. The card communication component 25b sends the card 40 a signal corresponding to the frequency outputted from the card 40 via the coil 21, for example.

The charging circuit 25c is used to charge the rechargeable battery 25d with the supplied power when the power receiving device 20 is supplied with power from the power feed device 10.

The rechargeable battery 25d stores electrical power for operating the power receiving device 20. When the power receiving device 20 is supplied with power from the power feed device 10, that power goes through the charging circuit 25c and is stored in the rechargeable battery 25d.

The communication component 26 is the second communication component in the present disclosure. The communication component 26 includes a communication circuit that communicates the state of the power receiving device 20 and other such information with the power feed device 10. For example, the communication component 26 notifies the power feed device 10 whether the power receiving device 20 is in a charging state, and the specific information about whether or not the card 40 has been detected. The communication component 26 can include a transmitter and/or receiver.

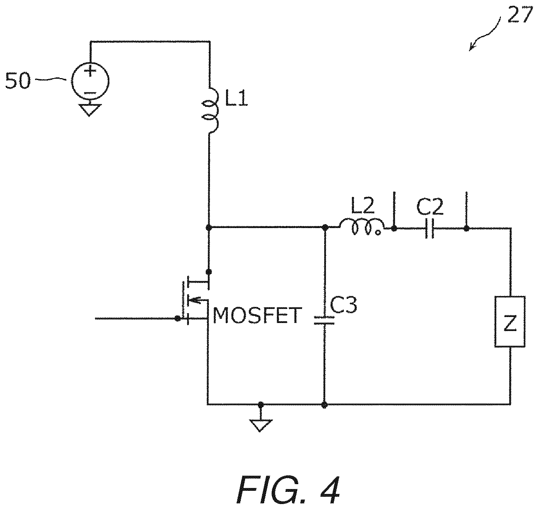

The impedance detector 27 is a detection circuit for detecting whether or not the card 40 is disposed near the power receiving device 20. FIG. 3 is a schematic diagram of the state in which the power receiving device 20 detects the card 40. FIG. 4 is a circuit diagram of the configuration of the impedance detector 27.

As shown in FIG. 3, the impedance detector 27 detects impedance changes in response to the power feeder 22 sending a signal (magnetic field) at the usage frequency of the card 40. More specifically, as shown in FIG. 4, the impedance detector 27 includes a power supply 50, inductors L1 and L2, a MOSFET, capacitors C2 and C3, and a load Z. The capacitor C2 and the inductor L2 are directly connected to the load Z. The capacitor C3 is connected in parallel with the load Z.

If the card 40 is near the power receiving device 20, the coil (not shown) of the card 40 changes the impedance of the load Z at the impedance detector 27. A change in the impedance of the load Z is detected by detecting a change in the phase difference and voltage at the two ends of the capacitor C2 connected in series with the load Z. If the impedance of the load Z has changed, the card 40 is near the power receiving device 20. If the impedance of the load Z has not changed, the card 40 is not near the power receiving device 20. In this way the impedance detector 27 detects whether or not the card 40 is near the power receiving device 20. Then, the detection result (i.e., presence or absence of the card 40 near the power receiving device 20) by the impedance detector 27 is stored in a memory (not shown) in the power receiving device 20 as the specific information about the card 40 (e.g., the card detection information). With this impedance detector 27, the card detection of the power receiving device 20 is performed.

### Operation of Power Feed Device and Power Receiving Device

The operation of the power feed device 10 and the power receiving device 20 will now be described.

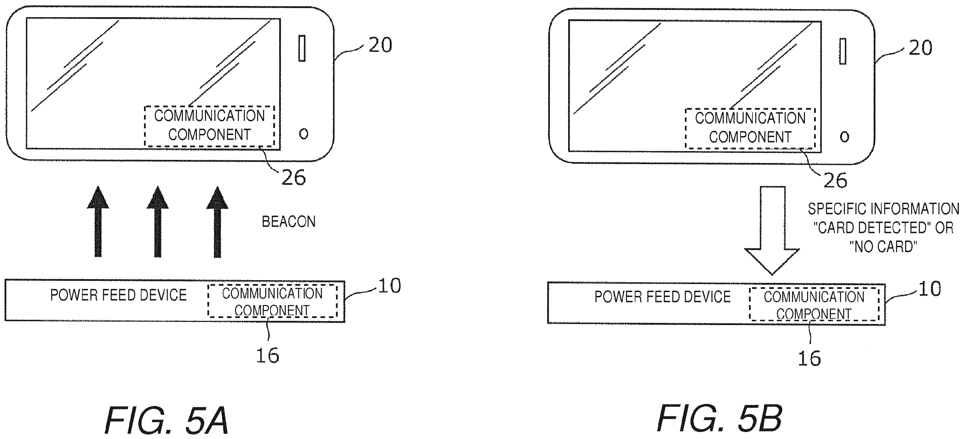

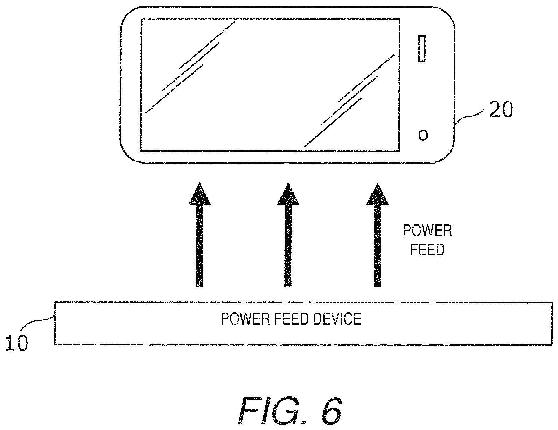

FIG. 5A and 5B are schematic diagrams of the communication state between the power feed device 10 and the power receiving device 20 in accordance with this embodiment. Specifically, FIG. 5A illustrates transmission (the beacon) from the power feed device 10 to the power receiving device 20. FIG. 5B illustrates information transmission (the specific information) from the power receiving device 20 to the power feed device 10. FIG. 6 is a schematic diagram of the power feed state from the power feed device 10 to the power receiving device 20 in accordance with this embodiment. FIG. 7 illustrates time charts (a) and (b) (simplified) showing the operation of the power feed device 10.

As discussed above, the power feed device 10 and the power receiving device 20 communicate with each other. As shown in FIG. 5A, a beacon for detecting the power receiving device 20 is sent out from the power feed device 10. As shown in the charts (a) and (b) in FIG. 7, the beacon is outputted from the power feed device 10 at specific time intervals to the power receiving device 20. If communication with the power receiving device 20 is established, that is, if the power receiving device 20 is located nearby, then the power feed device 10 halts the output of the beacon as shown in the chart (a) in FIG. 7. If communication is not established with the power receiving device 20, that is, if the power receiving device 20 is not nearby, then the communication component 16 of the power feed device 10 always continues emitting a beacon as shown in the chart (b) in FIG. 7.

As shown in FIG. 5B, the power receiving device 20 transmits the specific information (e.g., card detection information), which is information about whether or not the card 40 is near the power receiving device 20, to the power feed device 10. The power feed device 10 stops the output of the beacon once the power feed device 10 has received the specific information indicating that the card 40 is near the power receiving device 20. At this point, the power receiving device 20 can notify the user of the presence of the card 40 by sound or the like (described later).

If the power feed device 10 receives the specific information indicating that the card 40 is not near the power receiving device 20, then as shown in the chart (a) in FIG. 7, the power feed device 10 stops the output of the beacon, and then the power feed device 10 perform the power feed in order to send power from the power feeder 12 of the power feed device 10 through the coil 13 to the power receiving device 20 as shown in FIG. 6 and in the chart (a) in FIG. 7. The power that is fed from the power feed device 10 goes through the coil 21 of the power receiving device 20 and is received by the power receiver 24 to charge the secondary battery 25d.

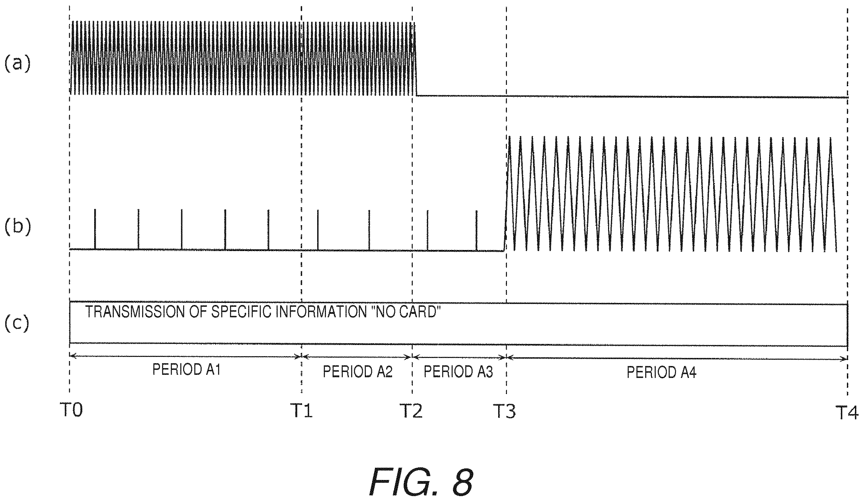

FIG. 8 illustrates time charts (a), (b) and (c) showing the transition in operation between the power feed device 10 and the power receiving device 20 when the card 40 is not near the power receiving device 20. The chart (a) shows the high-frequency signal outputted from the power receiving device 20 for the detection of the card 40. The chart (b) shows the signal outputted from the power feed device 10. The chart (c) shows the specific information about whether or not there is a card 40, which is transmitted from the power receiving device 20 to the power feed device 10. Specifically, in the illustrated embodiment, the communication component 26 transmits the specific information that has been stored in the memory (not shown) in the power receiving device 20 to the power feed device 10.

First, as shown in the chart (a) of FIG. 8, the power receiving device 20 sends out a magnetic field with the resonant frequency of the card 40 from the power feeder 22, and awaits the approach of the card 40. As shown in the chart (b) of FIG. 8, the power feed device 10 sends out a beacon from the power feeder 12 and through the coil 13, and prepares for power feed when the power receiving device 20 is put in place. During this time, the power receiving device 20 sends out the specific information indicating "no card," which means that the card 40 is not nearby (period A1).

Then, when the power receiving device 20 is placed at the power feed device 10 at the time T1, the power feed device 10 detects that the power receiving device 20 has been put in place from the beacon after the time T1. For example, after the power feed device 10 detects that the power receiving device 20 has been put in place from two consecutive beacons, the power feed device 10 confirms that the specific information indicating "no card" has come to the receiver 15. When the specific information indicating "no card" has come to the receiver 15, the power receiving device 20 stops the transmission of the magnetic field with the resonant frequency of the card 40 at the time T2 (period A2). Of course, the power feed device 10 can confirm that no specific information indicating "card detected" has come to the receiver 15. In this case, when the specific information indicating "card detected" has not come to the receiver 15, the power receiving device 20 stops the transmission of the magnetic field with the resonant frequency of the card 40 at the time T2 (period A2).

The beacon is stopped a specific length of time later (period A3), and at the time T3 power feed from the power feeder 12 to the power receiving device 20 is commenced at the power feed device 10, and power feed is performed until the time T4. Consequently, power is received at the power receiver 24 of the power receiving device 20, and is stored in the rechargeable battery 25d via the charging circuit 25c (period A4).

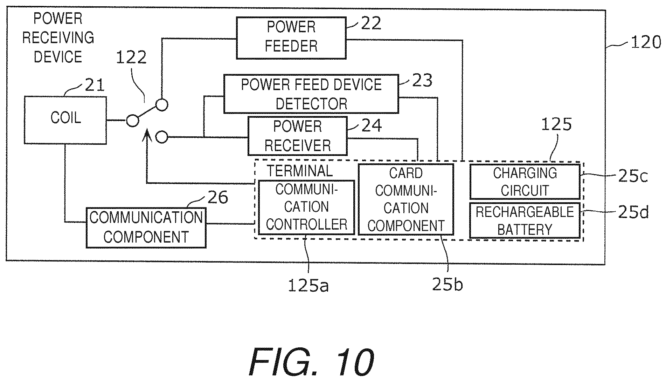

The power receiving device 20 can include a switching component 122 for switching the connection to the coil 21 between the power feeder 22 and the power receiver 24 (see FIG. 10). In this case, the switching of the switching component 122 from the power feeder 22 to the power receiver 24 can be performed at the power receiving device 20 in the period A3. The switching component 122 corresponds to the second switching component in the present disclosure.

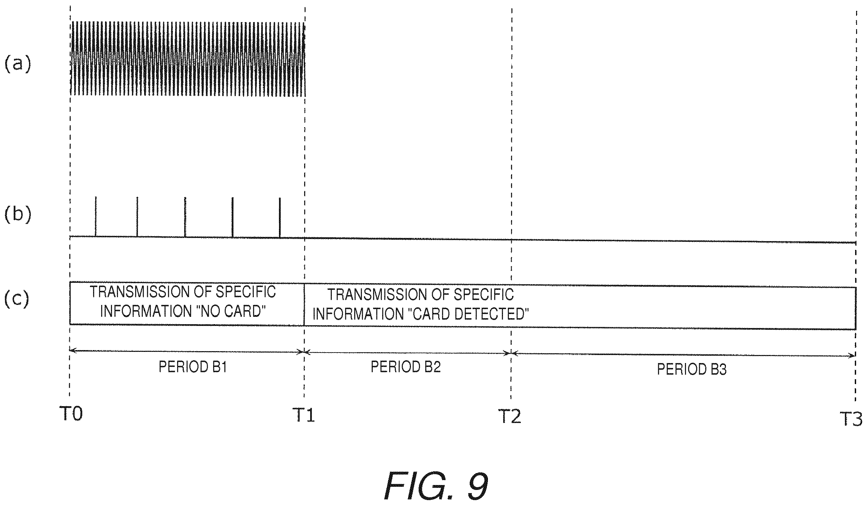

FIG. 9 illustrates time charts showing the transition in operation between the power feed device 10 and the power receiving device 20 when the card 40 is near the power receiving device 20.

Just as when the card 40 is not near the power receiving device 20, first the power receiving device 20 sends out a magnetic field with the resonant frequency of the card 40 from the power feeder 22 as shown in the chart (a) of FIG. 9, and awaits the approach of the card 40. As shown in the chart (b) of FIG. 9, the power feed device 10 sends out a beacon from the power feeder 12 and through the coil 13, and prepares for power feed when the power receiving device 20 is put in place. During this time, the power receiving device 20 sends out the specific information indicating "no card," which means that the card 40 is not nearby (period B1).

Then, if the card 40 is detected near the power receiving device 20 from a change in the impedance of the coil 21, the power receiving device 20 continues transmitting the specific information indicating "card detected" from the communication component 26 and through the coil 21 until the card 40 is disposed somewhere far from the power receiving device 20 (e.g., outside the detection range with the magnetic field). At the time T1, if the power feed device 10 receives the specific information indicating "card detected" from the power receiving device 20, then the power feed device 10 stops the transmission of the beacon after the time T1. Also, the power receiving device 20 stops the transmission of the magnetic field with the resonant frequency of the card 40. Because the power feed device 10 has received the specific information indicating "card detected" from the power receiving device 20, power feed from the power feeder 12 to the power receiving device 20 is not commenced at the power feed device 10. During the period in which the power feed device 10 is receiving the specific information indicating "card detected," the power feed device 10 does not detect the power receiving device 20 with a beacon even if the power receiving device 20 is put in place. Therefore, power feed from the power feed device 10 to the power receiving device 20 is not commenced during this period (periods B2 and B3).

Also, while the card 40 is disposed near the power receiving device 20, the communication component 26 of the power receiving device 20 preferably reduces the power level outputted from the communication component 26 so as to reduce the likelihood of damage to the card 40. In particular, once the power receiving device 20 detect the presence of the card 40, the communication component 26 reduces the power level of the magnetic field.

### Effect

When the power feed device 10 and the power receiving device 20 in accordance with this embodiment, when power is fed to the power receiving device 20 by the power feed device 10, the card 40 disposed near the power receiving device 20 can be prevented from being damaged.

In the illustrated embodiment, the power feed device 10 is configured to feed power to the power receiving device 20 using the magnetic field. The power feed device 10 includes the coil 13, the communication component 16 (e.g., the first communication component), and the controller 14. The coil 13 is configured to generate the magnetic field. The communication component 16 is configured to communicate with the power receiving device 20. The controller 14 is configured to control the generation of the magnetic field based on the card detection of the power receiving device 20.

In the illustrated embodiment, the communication component 16 is configured to receive the specific information (e.g., the card detection information) about the card detection from the power receiving device 20.

In the illustrated embodiment, the controller 14 is configured to control the generation of the magnetic field based on the specific information.

In the illustrated embodiment, the controller 14 is configured to restrict or limit the generation of the magnetic field based on the specific information.

In the illustrated embodiment, the controller is configured to execute the generation of the magnetic field while the specific information is indicating that the card 40 has not been detected (e.g., "no card" or absence of the card 40).

In the illustrated embodiment, the controller 14 is configured to prevent or stop the generation of the magnetic field while the specific information is indicating that the card 40 has been detected (e.g., "card detected" or presence of the card 40).

In the illustrated embodiment, the power receiving device 20 is configured to be fed power from the power feed device 10 using the magnetic field. The power receiving device 20 includes the power receiver 24, the coil 21, the impedance detector 27, and the communication component 26 (e.g., the second communication component). The power receiver 24 is configured to receive the magnetic field. The coil 21 is configured to transmit the signal based on the resonant frequency of the card 40. The impedance detector 27 is configured to detect the card 40 based on the change in the impedance of the coil 21. The communication component 26 is configured to communicate with the power feed device 10 based on the card detection by the impedance detector 27.

In the illustrated embodiment, the communication component 26 is configured to transmit the specific information (e.g., the card detection information) about the card detection to the power feed device 10.

In the illustrated embodiment, the power receiving device 20 further includes the communication controller 25a configured to restrict output of the communication component 26 based on the card detection.
In the illustrated embodiment, the power receiving device 20 further includes the rechargeable battery 25d configured to be charged based on the magnetic field received by the power receiver 24.

### SECOND EMBODIMENT

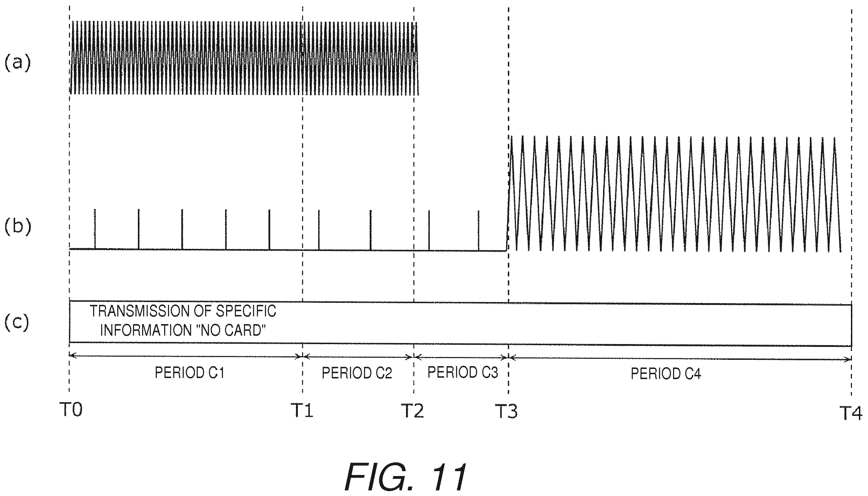

A second embodiment will now be described through reference to FIGS. 10 and 11.

The power receiving device 120 in accordance with this embodiment differs from the power receiving device 20 in accordance with the first embodiment in that it includes the switching component 122. The rest of the configuration is the same as in the first embodiment, and will therefore not be described in detail again.

FIG. 10 is a block diagram of the configuration of the power receiving device 120 in accordance with this embodiment. In FIG. 10, the impedance detector 27 shown in the first embodiment is not depicted for the sake of brevity.

As shown in FIG. 10, the power receiving device 120 includes the switching component 122 between the coil 21 and the power feeder 22 or the power receiver 24. The function of the switching component 122 is to switch the connection of the coil 21 to the power feeder 22 or to the power receiver 24. The switching component 122 can be a switch that can mechanically connect two terminals, for example. Alternatively, the switching component 122 can be a transistor or other such semiconductor switch. The switching component 122 connects the coil 21 to the power feeder 22, or connects the coil 21 to the power receiver 24, under control from a communication controller 125a of a terminal 125.

FIG. 11 illustrates time charts showing the transition in operation between the power feed device 10 and the power receiving device 20 when the card 40 is not near the power receiving device 120.

Other than the switching operation of the switching component 122, the operation of the power receiving device 120 is substantially the same as that of the power receiving device 20 in the first embodiment. More specifically, the power feed device 10 uses a beacon to detect that the power receiving device 120 has been put in place. Also, the power receiving device 120 sends out the specific information indicating "no card" to the receiver 15 of the power feed device 10. Specifically, the operation in the periods C1, C2, and C4 shown in FIG. 11 is the same as the operation in the periods A1, A2, and A4 shown in FIG. 8 of the first embodiment. Here, in period C3 shown in FIG. 11, while the specific information indicating "no card," the power receiving device 120 switches the switching component 122 to change the connection of the coil 21 from the power feeder 22 to the power receiver 24. When the connection target of the switching component 122 of the power receiving device 120 is switched, the power feed device 10 commences feeding power to the power receiving device 120.

In the illustrated embodiment, the power receiving device 120 further includes the switching component 122 (e.g., the second switching component) configured to switch the connection to the coil 21 between the power receiver 24 and the communication component 26 (e.g., the second communication component).

### THIRD EMBODIMENT

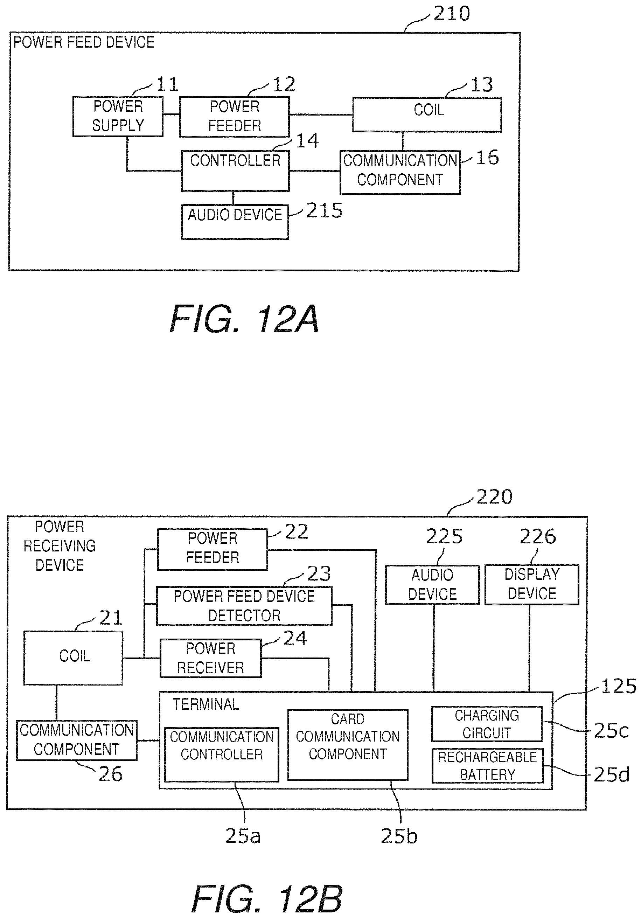

A third embodiment will now be described through reference to FIGS. 12A and 12B.

The power feed device 210 in accordance with this embodiment differs from the power feed device 10 in accordance with the first embodiment in that it includes an audio device 215. Also, the power receiving device 220 in accordance with this embodiment differs from the power receiving device 20 in accordance with the first embodiment in that it includes an audio device 225 and a display device 226. The rest of the configuration is the same as in the first embodiment, and will therefore not be described in detail again.

FIG. 12A is a block diagram of the configuration of the power feed device 210 in accordance with this embodiment.

As shown in FIG. 12A, the power feed device 210 includes the audio device 215 for notifying the user that the card 40 is near the power receiving device 220. The audio device 215 corresponds to the output component in the present disclosure. The audio device 215 includes a speaker, for example, and outputs sound prompting the user to remove the card 40, under control from the controller 14. The sound or audio here may be a recording of a human voice, a voice or warning sound artificially synthesized by a computer, or anything else.

Upon receiving the specific information indicating "card detected" from the power receiving device 220, the power feed device 210 outputs sound from the audio device 215 to prompt the user to remove the card 40. Consequently, the user learns from the sound outputted from the audio device 215 that the card 40 is near the power receiving device 220, and removes the card 40. Once the card 40 has been removed from the power receiving device 220, the transmission of the specific information indicating "card detected" from the power receiving device 220 is stopped, and the specific information indicating "no card" is transmitted. Consequently, the power feed device 210 resumes transmission of the beacon and awaits the placement of the power receiving device 220 in the same manner as the above-mentioned embodiments.

This prevents the card 40 from being damaged by the electrical power sent from the power feed device 210.

Here, the audio device is not limited to being on the power feed device 210 side. The audio device can be alternatively or additionally provided on the power receiving device 220 side. Also, the method for notifying the user that the card 40 is near the power receiving device 220 is not limited to the use of sound, and may instead involve an image.

FIG. 12B is a block diagram of the configuration of the power receiving device 220 in accordance with this embodiment. In FIG. 12B, the impedance detector 27 shown in the first embodiment is not depicted for the sake of brevity.

As shown in FIG. 12B, the power receiving device 220 includes an audio device 225 for notifying the user by sound that the card 40 is near the power receiving device 220. The audio device 225 corresponds to the output component in the present disclosure. Also, the power receiving device 220 includes a display device 226 for notifying the user by image that the card 40 is near the power receiving device 220. The display device 226 also corresponds to the output component in the present disclosure. The display device 226 notifies the user that the card 40 is near by the power receiving device 220 using words, a picture, a photograph, or the like displayed on a display of the display device 226. Consequently, the user learns that the card 40 is near the power receiving device 220 from the sound outputted by the audio device 225 or the image outputted by the display device 226, and can therefore remove the card 40.

With this configuration, the card 40 can be prevented from being damaged by the electrical power sent out from the power feed device 210.

The power receiving device 220 need not include both the audio device 225 and the display device 226, and may instead include only the audio device 225 or the display device 226.

In the illustrated embodiment, the power feed device 210 further includes the audio device 215 (e.g., the output component) configured to output the notification based on the card detection of the power receiving device 220. Also, the power receiving device 220 further includes the audio device 225 (e.g., the output component) and/or the display device 226 (e.g., the output component) configured to output the notification based on the card detection of the power receiving device 220.

### FOURTH EMBODIMENT

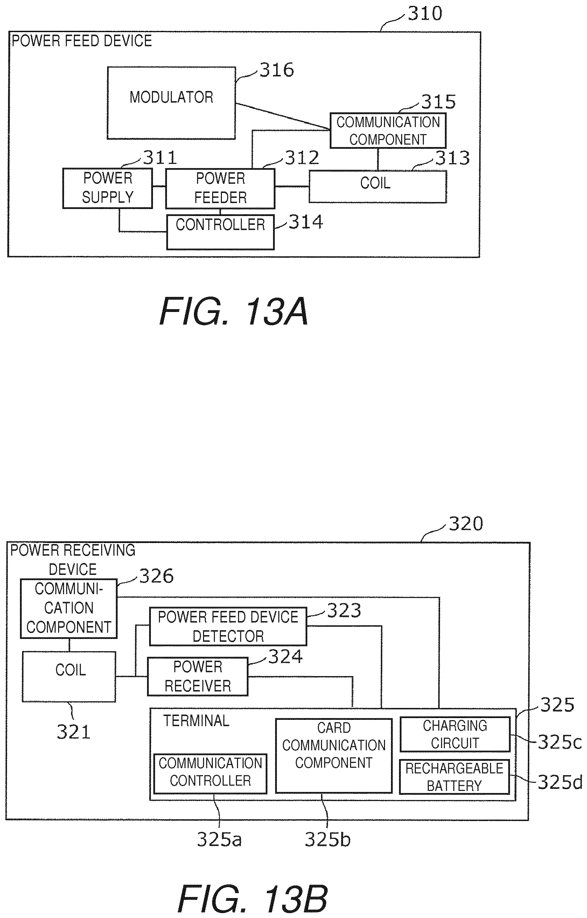

A fourth embodiment will now be described through reference to FIGS. 13A to 17.

The power feed device 310 in accordance with this embodiment differs from the power feed device 10 in accordance with the first embodiment in that when the card 40 is near a power receiving device 320, the power receiving device 320 modulates the magnetic field that is transmitted from the power receiving device 320 for detecting the card 40. The rest of the configuration is the same as in the first embodiment, and will therefore not be described in detail again.

FIG. 13A is a block diagram of the configuration of the power feed device 310 in accordance with this embodiment.

As shown in FIG. 13A, the power feed device 310 includes a power supply 311, a power feeder 312, a coil 313, a controller 314, a communication component 315, and a modulator 316. The power supply 311, the power feeder 312, the coil 313, and the controller 314 are the same as the power supply 11, the power feeder 12, the coil 13, and the controller 14 in the first embodiment, and will therefore not be described in detail again. The communication component 315 corresponds to the first communication component in the present disclosure.

With this embodiment, the power feed device 310 commences power feed based on communication information only when communication has been established with the power receiving device 320. That is, no power feed is performed while communication with the power receiving device 320 has not been established.

At the power feed device 310, the communication component 315 receives a magnetic field for detection of the card 40 by the power receiving device 320. This magnetic field is a signal (magnetic field) at the usage frequency of the card 40, and is sent out from the power receiving device 320. If the card 40 is near the power receiving device 320, then the magnetic field is modulated by a communication component 326 of the power receiving device 320. The modulation method may be, for example, amplitude modulation (ASK), frequency modulation (FSK), phase modulation (PSK), pulse width modulation (PWM), or another such method. In this embodiment, ASK modulation is described as an example. Of course, the modulator 316 can perform the modulation method to modulate the magnetic field.

FIG. 13B is a block diagram of the configuration of the power receiving device 320 in accordance with this embodiment. In FIG. 13B, the impedance detector 27 shown in the first embodiment is not depicted for the sake of brevity.

As shown in FIG. 13B, the power receiving device 320 includes a coil 321, a power feed device detector 323 (e.g., power feed device detection circuit), a power receiver 324 (e.g., power reception circuit), a terminal 325, and a communication component 326. The terminal 325 includes a communication controller 325a, a card communication component 325b, a charging circuit 325c, and a rechargeable battery 325d. The coil 321, the power feed device detector 323, the power receiver 324, the terminal 325, the communication controller 325a, the card communication component 325b, the charging circuit 325c, and the rechargeable battery 325d are the same as the coil 21, the power feed device detector 23, the power receiver 24, the terminal 25, the communication controller 25a, the card communication component 25b, the charging circuit 25c, and the rechargeable battery 25d in the first embodiment, and therefore will not be described in detail again. The communication component 326 corresponds to the second communication component in the present disclosure.

With the power receiving device 320, the coil 321 is connected on the communication component 326 side. The communication component 326 transmits a signal at the usage frequency of the card 40 via the coil 321, and detects the card 40 (presence or absence of the card 40). The power receiving device 320 determines that the card 40 is near the power receiving device 320 when an impedance change is detected at the power receiver 324. Of course, the impedance change can be detected by the impedance detector 27 (FIG. 2B) as described in the first embodiment. The communication component 326 then modulates the usage frequency signal for the card 40, and the modulated signal is outputted from the communication component 326.

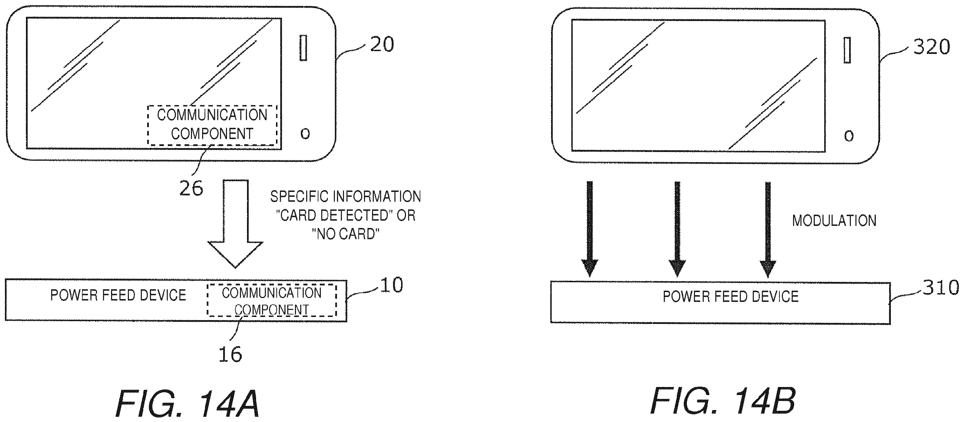

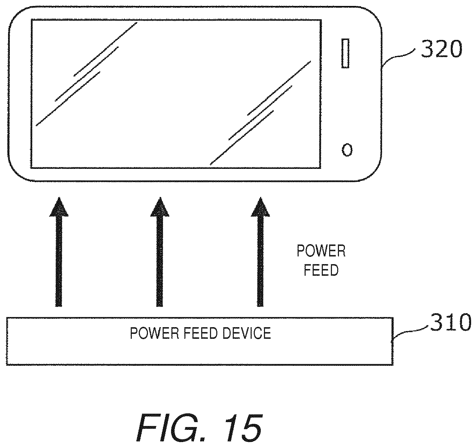

FIG. 14A is a schematic diagram of the communication state between the power feed device 10 and the power receiving device 20 in accordance with the first embodiment. FIG. 14B is a schematic diagram of the communication state between the power feed device 310 and the power receiving device 320 in accordance with this embodiment. Specifically, FIG. 14A illustrates a comparative example of information transmission from the power receiving device 20 to the power feed device 10 in accordance with the first embodiment. FIG. 14B illustrates information transmission from the power receiving device 320 to the power feed device 310 in accordance with this embodiment. FIG. 15 is a schematic diagram of the power feed state from the power feed device 310 to the power receiving device 320 in accordance with this embodiment.

With the power feed device 10 and the power receiving device 20 in the first embodiment, as shown in FIG. 14A, the specific information about whether or not the card 40 is near the power receiving device 20 is communicated by wireless LAN, Bluetooth (registered trademark), or another such communication method.

On the other hand, with the power feed device 310 and the power receiving device 320 in accordance with this embodiment, as shown in FIG. 14B, modulation is applied to the magnetic field at the communication component 326 of the power receiving device 320, so that the specific information indicating that the card 40 is near the power receiving device 320 is superposed over the signal (magnetic field) for detecting the card 40.

When the magnetic field transmitted from the communication component 326 has been modulated, the card 40 is near the power receiving device 320. Thus, the power feed device 310 does not send out power from the power feed device 310 to the power receiving device 320. Also, when the magnetic field received by the communication component 315 has not been modulated, the card 40 is not near the power receiving device 320. Thus, the power feed device 310 sends out power from the power feed device 310 to the power receiving device 320 as shown in FIG. 15.

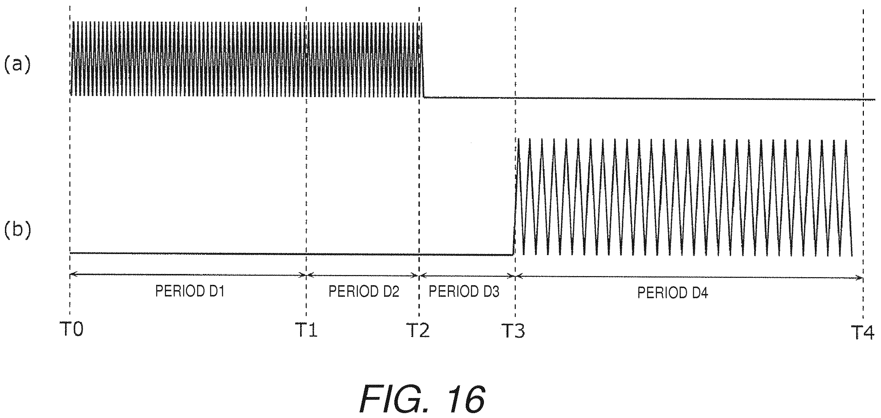

FIG. 16 illustrates time charts showing the transition in operation between the power feed device 310 and the power receiving device 320 when the card 40 is not near the power receiving device 320.

First, as shown in the chart (a) of FIG. 16, the power receiving device 320 sends out a signal (magnetic field) at the usage frequency of the card 40 from the communication component 326, and awaits the approach of the card 40 (period D1).

Then, when the power receiving device 320 is placed over the power feed device 310 at the time T1, the communication component 315 of the power feed device 310 detects the specific information indicating "no card" sent out from the power receiving device 320, from the reception of the magnetic field sent out from the communication component 326 of the power receiving device 320. More specifically, if the card 40 is not near the power receiving device 320, then the magnetic field received by the communication component 315 of the power feed device 310 has not been modulated. Therefore, the communication component 315 determines that the card 40 is not near the power receiving device 320 (period D2). Furthermore, the power receiving device 320 stops sending out the magnetic field at the time T2.

After a specific period (period D3) has elapsed, the power feeder 312 of the power feed device 310 starts feeding power to the power receiving device 320 and continues this power feed until the time T4 (period D4), as shown in the chart (b) of FIG. 16.

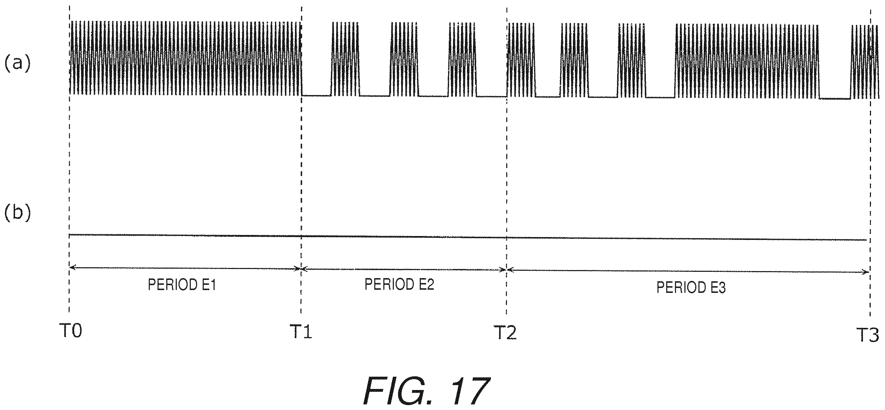

FIG. 17 illustrates time charts showing the transition in operation between the power feed device 310 and the power receiving device 320 when the card 40 is near the power receiving device 320.

Just as when the card 40 is not near the power receiving device 20, first the power receiving device 320 sends out a signal (magnetic field) at the usage frequency of the card 40 from the communication component 326 as shown in the chart (a) of FIG. 17, and awaits the approach of the card 40 (period E1).

If the power receiving device 320 detects the card 40 near the power receiving device 320 from a change in the impedance of the coil 313 at the time T1, then the communication component 326 modulates the magnetic field in order to superpose the specific information indicating "card detected" over the magnetic field (period E2).

In this state, if the power feed device 310 detects that the power receiving device 320 has been put in place, then the power feed device 310 receives the modulated magnetic field from the power receiving device 320. Consequently, the power feed device 310 determines that the card 40 is near the power receiving device 320, and does not commence power feed.

In the illustrated embodiment, the power feeder 312 of the power feed device 310 may periodically (such as about every second) halt the modulation while the magnetic field is being modulated, and may confirm whether or not the card 40 is near the power receiving device 320 using impedance sensing (periods E2 and E3). If the card 40 is near the power receiving device 320, the communication component 326 of the power receiving device 320 resumes the modulation. If the card 40 has been removed from near the power receiving device 320, then the communication component 326 of the power receiving device 320 continuously stops modulation, and starts feeding power from the power feed device 310 to the power receiving device 320 just as shown in FIG. 16.

ASK modulation is used as an example in this embodiment, but FSK modulation, PSK modulation, or PWM modulation may be used instead, or a combination of these may be used. A number of modulation methods can be used together to communicate the states of the power feed device 310 and the power receiving device 320, or the control details about the power feed device 310 with each other, in addition to the specific information about whether or not there is a card 40.

With the power feed device 310 and the power receiving device 320 in accordance with this embodiment, the configuration of the devices can be simplified because there is no need for the power receiving device 320 to communicate to the power feed device 310 that the card 40 is near the power receiving device 320 by wireless LAN, Bluetooth (registered trademark), or another such communication method, as described in the first embodiment.

In the illustrated embodiment, the communication component 315 (e.g., the first communication component) is configured to receive the modulated magnetic field (e.g., the modulated signal) modulated based on the card detection of the power receiving device 320.

In the illustrated embodiment, the controller 314 is configured to control the generation of the magnetic field for feeding power to the power based on the modulated magnetic field (e.g., the modulated signal).

In the illustrated embodiment, the controller 314 is configured to restrict or limit the generation of the magnetic field for feeding power based on the modulated magnetic field (e.g., the modulated signal).

In the illustrated embodiment, the controller 314 is configured to execute the generation of the magnetic field for feeding power while the modulated magnetic field (e.g., the modulated signal) is indicating that the card 40 has not been detected.

In the illustrated embodiment, the controller 314 is configured to prevent or stop the generation of the magnetic field for feeding power while the modulated magnetic field (e.g., the modulated signal) is indicating that the card 40 has been detected.

In the illustrated embodiment, the communication component 326 (e.g., the second communication component) is configured to modulate the magnetic field (e.g., the signal) of the resonant frequency of the card 40 based on the card detection.

### FIFTH EMBODIMENT

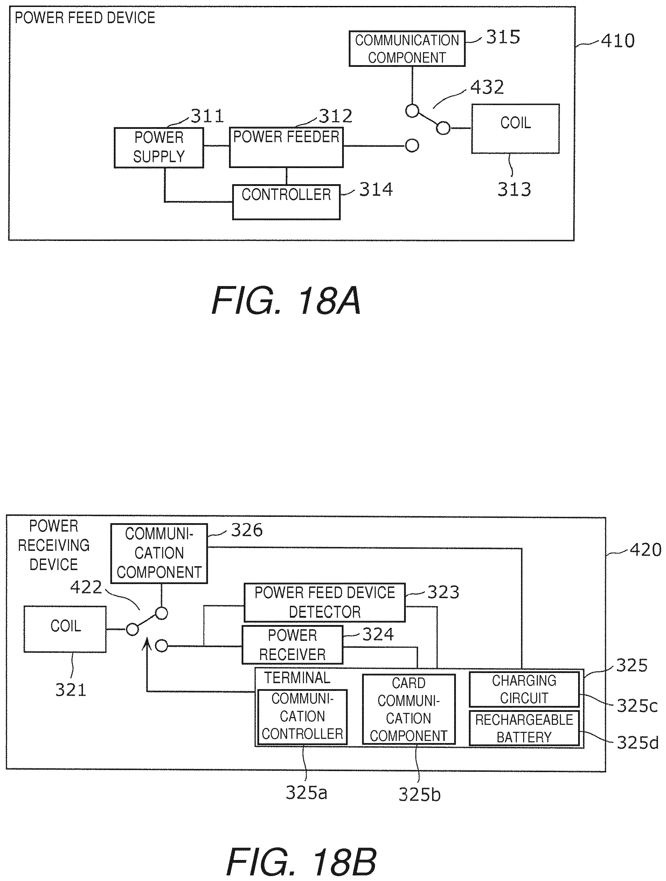

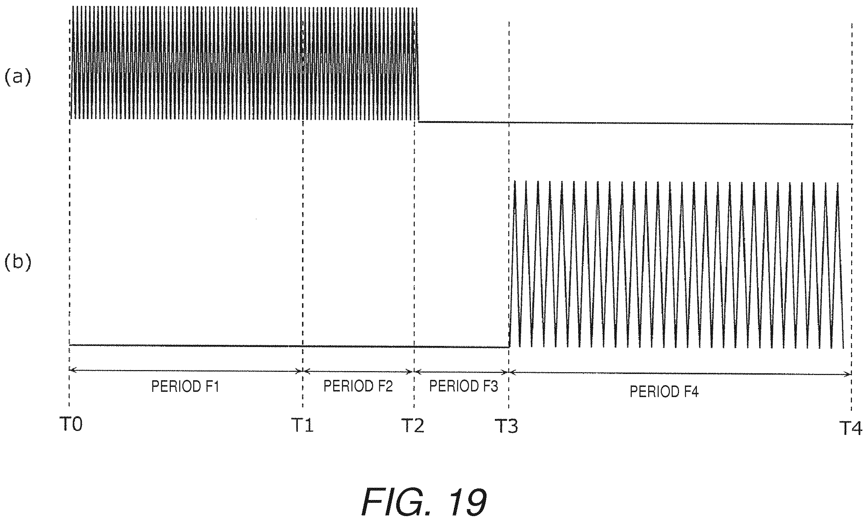

The power receiving device in accordance with a fifth embodiment will now be described through reference to FIGS. 18A, 18B, and 19.

The power feed device 410 in accordance with this embodiment differs from the power feed device 310 in accordance with the fourth embodiment in that it includes a switching component 432. Also, the power receiving device 420 in accordance with this embodiment differs from the power receiving device 320 in accordance with the fourth embodiment in that it includes a switching component 422. The rest of the configuration is the same as in the fourth embodiment, and will therefore not be described in detail again.

FIG. 18A is a block diagram of the configuration of the power feed device 410 in accordance with this embodiment. FIG. 18B is a block diagram of the configuration of the power receiving device 420 in accordance with this embodiment.

As shown in FIG. 18A, the power feed device 410 includes the switching component 432 for connecting the coil 313 to the power feeder 312 or the communication component 315. The switching component 432 corresponds to the first switching component in the present disclosure. The switching component 432 may be, for example, a switch with which two terminals can be mechanically connected, or it may be a transistor or other such semiconductor switch. The switching component 432 can be switched to connect the coil 313 to the power feeder 312, or connect the coil 313 to the communication component 315, at the power feed device 410. With the power feed device 410, when the coil 313 is connected to the communication component 315 by the switching component 432, a signal (magnetic field) at the usage frequency of the card 40 is received from the power receiving device 420. Consequently, it is detected whether or not the card 40 is near the power receiving device 420.

Also, as shown in FIG. 18B, the power receiving device 420 includes the switching component 422 between the coil 321 and the power receiver 324 or the communication component 326. The switching component 422 corresponds to the second switching component in the present disclosure. The switching component 422 has the function of switching the connection of the coil 321 to the power receiver 324 or the communication component 326. The switching component 422 is similar to the switching component 122 in the second embodiment in that it may be a switch that can mechanically connect two terminals, for example, or it may be a transistor or other such semiconductor switch. The switching component 422 connects the coil 321 to the communication component 326, or connects the coil 321 to the power receiver 324, under control from a communication controller 325a.

If the power receiving device 420 is put in place while no card 40 is near the power receiving device 420, the power feed device 410 detects that the card 40 is not near the power receiving device 420 using the communication component 315. The communication component 315 of the power feed device 410 transmits a signal to the power receiving device 420 through communication by load modulation such that the power receiving device 420 start preparing for power feed. Consequently, the power receiving device 420 switches the switching component 422 from the communication component 326 to the power receiver 324, and enters a reception standby state. After this, the feed of power from the power feed device 410 to the power receiving device 420 is commenced, and power is fed to the power receiving device 420.

FIG. 19 illustrates time charts showing the transition in operation between the power feed device 410 and the power receiving device 420 when no card 40 is near the power receiving device 420.

The operation of the power feed device 410 and the power receiving device 420 is substantially the same as that of the power receiving device 320 in the fourth embodiment, except for the switching operation of the switching component 432 and the switching component 422.

The operation in periods F1 and F2 shown in charts (a) and (b) of FIG. 19 is the same as the operation in periods D1 and D2 shown in the charts (a) and (b) of FIG. 16 in the fourth embodiment. Here, in period F3 shown in FIG. 19, after receiving the specific information indicating "no card" (e.g., upon determining no card 40 is near the power receiving device 420), the power receiving device 420 switches the switching component 422, which changes the connection of the coil 321 from the communication component 326 to the power receiver 324. Also, in period F3 shown in FIG. 19, after receiving the specific information indicating "no card" from the modulated state of the magnetic field, for example, the power feed device 410 changes the connection of the switching component 432 from the communication component 315 to the power feeder 312. When the connection of the switching component 422 and the switching component 432 is switched, the power feed device 410 starts feeding power to the power receiving device 420 as shown in period F4 in the chart (b) of FIG. 19.

In the illustrated embodiment, the power feed device 410 further includes the power feeder 312 configured to drive the coil 313, and the switching component 432 (e.g., the first switching component) configured to switch the connection to the coil 313 between the power feeder 312 and the communication component 315 (e.g., the first communication component).

In the illustrated embodiment, the power receiving device 420 further includes the switching component 422 (e.g., the second switching component) configured to switch the connection to the coil 321 between the power receiver 324 and the communication component 326 (e.g., the second communication component).

### SIXTH EMBODIMENT

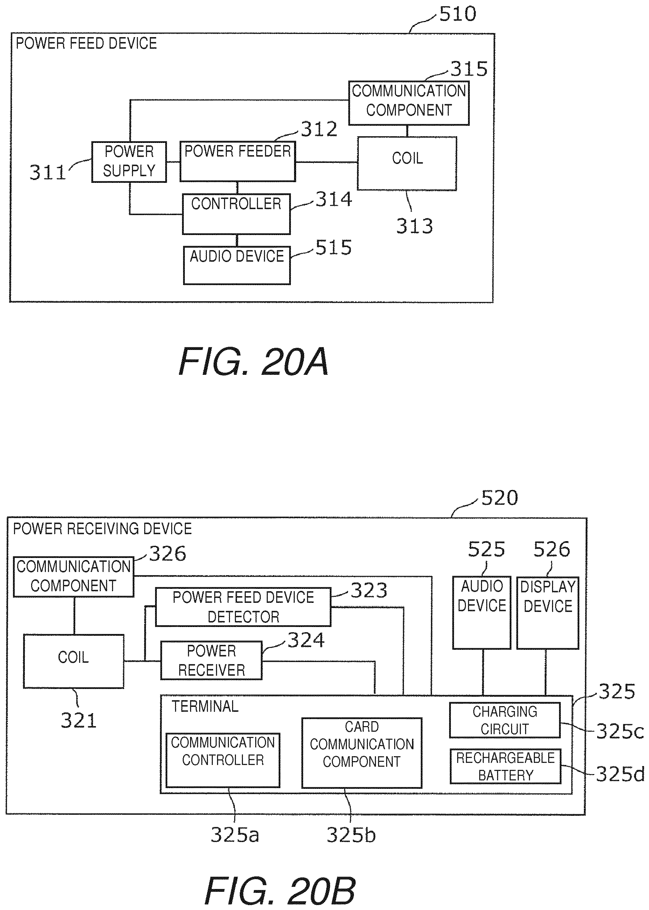

The power receiving device in accordance with a sixth embodiment will now be described through reference to FIGS. 20A and 20B.

The power feed device 510 in accordance with this embodiment differs from the power feed device 310 in accordance with the fourth embodiment in that it includes an audio device 515. Also, the power receiving device 520 in accordance with this embodiment differs from the power receiving device 320 in accordance with the fourth embodiment in that it includes an audio device 525 and a display device 526. The rest of the configuration is the same as in the fourth embodiment, and will therefore not be described in detail again.

FIG. 20A is a block diagram of the configuration of the power feed device 510 in accordance with this embodiment.

As shown in FIG. 20A, the power feed device 510 includes the audio device 515 for notifying the user that the card 40 is near the power receiving device 520. The audio device 515 corresponds to the output component in the present disclosure. The audio device 515 is configured the same as the audio device 215 in the third embodiment. The audio device 515 is a speaker, for example, and outputs sound prompting the user to remove the card 40, under control from the controller 314.

Consequently, the user learns from the sound outputted from the audio device 515 that the card 40 is near the power receiving device 520, and can remove the card 40.

Also, the audio device is not limited to being provided on the power feed device 510 side. The audio device can be alternatively or additionally provided on the power receiving device 520 side. Also, the method for notifying the user that the card 40 is near the power receiving device 520 is not limited to the use of sound, and may instead involve an image.

FIG. 20B is a block diagram of the configuration of the power receiving device 520 in accordance with this embodiment. In FIG. 20B, the impedance detector 27 shown in the first embodiment is not depicted for the sake of brevity.

As shown in FIG. 20B, the power receiving device 520 includes the audio device 525 for notifying the user by sound that the card 40 is near the power receiving device 520. The audio device 525 corresponds to the output component in the present disclosure. Also, the power receiving device 520 includes the display device 526 for notifying the user by image that the card 40 is near the power receiving device 520. The display device 526 also corresponds to the output component in the present disclosure. The audio device 525 and the display device 526 are configured the same as the audio device 225 and the display device 226 in the third embodiment.

Consequently, the user learns from the sound outputted from the audio device 525 or the image outputted from the display device 526 that the card 40 is near the power receiving device 520, and can remove the card 40.

With this configuration, the card 40 can be prevented from being damaged by the electrical power sent out from the power feed device 510.

The power receiving device 520 does not need to include both the audio device 525 and the display device 526, and may include only the audio device 525 or the display device 526.

In the illustrated embodiment, the power feed device 510 further includes the audio device 515 (e.g., the output component) configured to output the notification based on the card detection of the power receiving device 220 or 520. Also, the power receiving device 520 further includes the audio device 525 (e.g., the output component) and/or the display device 526 (e.g., the output component) configured to output the notification based on the card detection of the power receiving device 520.

### SEVENTH EMBODIMENT

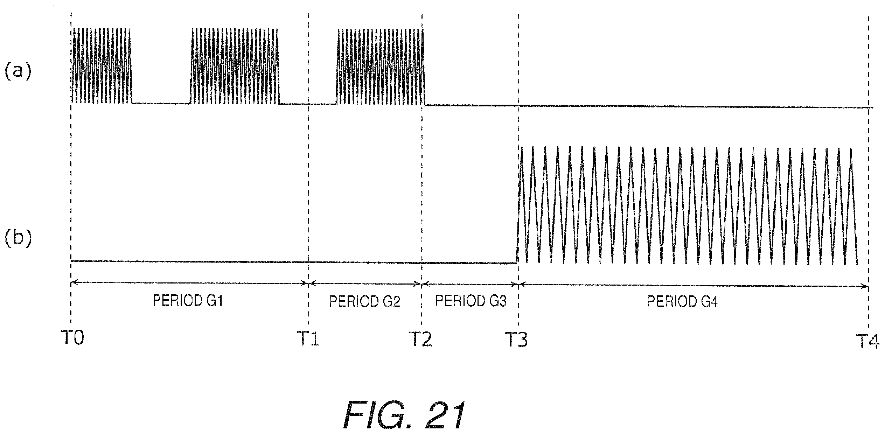

The power receiving device in accordance with a seventh embodiment will now be described through reference to FIG. 21.

The power receiving device 320 in accordance with this embodiment differs from the power receiving device 320 in accordance with the fourth embodiment in that the generation of the magnetic field is intermittent. The rest of the configuration is the same as in the fourth embodiment, and therefore will not be described again in detail, and will be numbered the same.

FIG. 21 illustrates time charts showing the transition in operation between the power feed device 310 and the power receiving device 320 in accordance with this embodiment.

First, as shown in the chart (a) of FIG. 21, the power receiving device 320 sends out a magnetic field at the frequency of the card 40 from the communication component 326, and awaits the approach of the card 40 (period G1). Next, when the power receiving device 320 is disposed on the power feed device 310 at the time T1, the communication component 315 of the power feed device 310 detects the specific information indicating "no card" sent out from the power receiving device 320, from the receipt of the magnetic field sent out from the communication component 326 of the power receiving device 320 (period G2). Here, the magnetic field is intermittently sent out from the communication component 326 of the power receiving device 320. Specifically, the magnetic field is stopped for a specific period after being outputted for a specific period, and then outputted again for a specific period. Thus, the output of the magnetic field from the communication component 326 is performed intermittently while an attempt is made to detect the card 40.

Consequently, power consumption can be reduced during detection of the card 40.

In the illustrated embodiment, with the power receiving device 320 (FIG. 13B), the coil 321 is configured to intermittently transmit the magnetic field (e.g., the signal).

The power receiving devices in accordance with embodiments are described above, but the present invention is not limited to or by these embodiments.

For example, in the first embodiment above, the method for communicating between the power feed device 10 and the power receiving device 20 includes transmitting to a non-contact power receiving device by a wireless LAN, Bluetooth (registered trademark), or another such communication method. However, this is not the only option. A frequency that is different from that of power feed, such as a wireless LAN or Bluetooth (registered trademark) can be used. Also, a communication method in which a magnetic field is modulated and the power receiving device receives a signal that has undergone load modulation can be used.

Also, in the above-mentioned embodiments, the power feed device may include a switching component for connecting the coil to the power feeder or the communication component. Also, the power receiving device may comprise a switching component for connecting the coil to the power receiver or the communication component.

Also, the power feed device may include an audio device for notifying the user of the presence of a card. Also, the power feed device may include an audio device and/or a display device for notifying the user of the presence of a card.

Also, the power receiving device may intermittently transmit the output of the magnetic field from the communication component during detection of the card.

Furthermore, the communication component, the transmitter, the receiver, the controller, and other such processors may be constituted by a single system LSI (large scale integrated circuit). A system LSI is a super-multifunctional LSI manufactured by integrating a plurality of constituent components on a single chip, and more specifically is a computer system made up of a microprocessor, a ROM, a RAM, and so forth. Computer programs are stored in the RAM. The microprocessor operates according to a computer program, which allows the system LSI to achieve its functions.

Also, the present invention may be the methods discussed above. Also, the present invention may be a computer program with which these methods are executed, or may be a digital signal composed of the above-mentioned computer program.

Furthermore, the present invention may be the product of recording the above-mentioned computer programs or digital signals to a non-transitory recording medium that can be read by a computer, such as a flexible disk, a hard disk, a CD-ROM, a MO disk, a DVD, a DVD-ROM, a DVD-RAM, a BD (Blu-Ray (registered trademark) Disc), a semiconductor memory, or the like. Also, it may be the above-mentioned digital signals that have been recorded to these non-transitory recording media.

Also, the present invention may be such that the above-mentioned computer programs or digital signals are transmitted via an electrical communication line, a wireless or wired communication line, a network such as the Internet, data broadcast, or the like.

Also, the present invention may be a computer system comprising a microprocessor and a memory, wherein the memory stores the above-mentioned computer programs, and the microprocessor operates according to these computer programs.

Also, the present invention may involve the use of another, independent computer system, by recording the above-mentioned programs or digital signals to the above-mentioned non-transitory recording media for transfer, or by transferring the above-mentioned programs or digital signals via the above-mentioned network or the like.

Furthermore, the above embodiments and modification examples may be combined with one another.

The present invention can be utilized, for example, for power feed devices, power feed systems, and so forth for the non-contact charging of portable telephones, smart phones, tablets, and other such portable electronic devices.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. A power feed device (10, 210, 310, 410, 510) configured to feed power to a power receiving device (20, 120, 220, 320, 420, 520) using a magnetic field, the power feed device comprising:
a coil (13, 313) configured to generate the magnetic field;
a first communication component (16, 315) configured to communicate with the power receiving device; and
a controller (14, 314) configured to control generation of the magnetic field,
**characterized in that**:
the first communication component is configured to receive card information from the power receiving device, the card information indicating whether or not there is a card (40) near the power receiving device; and
the controller is configured to control generation of the magnetic field based on the card information.

2. The power feed device according to claim 1, wherein
the controller is configured to prevent the generation of the magnetic field when the first communication component has received the card information indicating that there is a card near the power receiving device.

3. The power feed device (310, 410, 510) according to claim 2, wherein
the first communication component (312) is configured to receive modulated signal modulated as the card information indicating that there is a card near the power receiving device.

4. The power feed device (410) according to claim 3, further comprising
a power feeder (12, 312) configured to drive the coil, and
a first switching component (432) configured to switch a connection to the coil between the power feeder and the first communication component.

5. The power feed device (210, 510) according to any one of claims 1 to 4, further comprising
an output component (215, 515) configured to output a notification based on the card information.

6. A power receiving device (20, 120, 220, 320, 420, 520) configured to be fed power from a power feed device (10, 210, 310, 410, 510) using a magnetic field, the power receiving device comprising:
a power receiver (24, 324) configured to receive the magnetic field;
a coil (21, 321) configured to transmit a signal based on a resonant frequency of a card (40); and
a second communication component (26, 326) configured to communicate with the power feed device,
**characterized in that**:
the power receiving device further comprises
an impedance detector (27) configured to detect whether or not there is the card near the power receiving device based on a change in an impedance of the coil; and
the second communication component is configured to transmit card information to the power feed device, the card information indicating whether or not there is the card near the power receiving device.

7. The power receiving device (320, 420, 520) according to claim 6, wherein
the second communication component (326) is configured to modulate the signal of the resonant frequency of the card based on the card information.

8. The power receiving device according to claim 6 or 7, further comprising
a communication controller (25a, 325a) configured to restrict output of the second communication component based on the card information.

9. The power receiving device (120, 420) according to any one of claims 6 to 8, further comprising
a second switching component (122, 422) configured to switch a connection to the coil between the power receiver and the second communication component.

10. The power receiving device according to any one of claims 6 to 9, wherein
the coil is configured to intermittently transmit the signal.

11. The power receiving device according to any one of claims 6 to 10, further comprising
a rechargeable battery (25d, 325d) configured to be charged based on the magnetic field received by the power receiver.

## Patentansprüche

1. Stromzuführungsvorrichtung (10, 210, 310, 410, 510), die konfiguriert ist, einer Stromaufnahmevorrichtung (20, 120, 220, 320, 420, 520) mittels eines Magnetfelds Strom zuzuführen, wobei die Stromzuführungsvorrichtung aufweist:
eine Spule (13, 313), die konfiguriert ist, das Magnetfeld zu erzeugen;
eine erste Kommunikationskomponente (16, 315), die konfiguriert ist, mit der Stromaufnahmevorrichtung zu kommunizieren; und
eine Steuereinrichtung (14, 314), die konfiguriert ist, die Erzeugung des Magnetfelds zu steuern, **dadurch gekennzeichnet, dass**:
die erste Kommunikationskomponente konfiguriert ist, Karteninformationen von der Stromaufnahmevorrichtung zu empfangen, wobei die Karteninformationen anzeigen, ob sich eine Karte (40) nahe der Stromaufnahmevorrichtung befindet; und
die Steuereinrichtung konfiguriert ist, die Erzeugung des Magnetfelds beruhend auf den Karteninformationen zu steuern.

2. Stromzuführungsvorrichtung nach Anspruch 1, wobei
die Steuereinrichtung konfiguriert ist, die Erzeugung des Magnetfelds zu verhindern, wenn die erste Kommunikationskomponente die Karteninformationen empfangen hat, die anzeigen, dass sich eine Karte nahe der Stromaufnahmevorrichtung befindet.

3. Stromzuführungsvorrichtung (310, 410, 510) nach Anspruch 2, wobei
die erste Kommunikationskomponente (312) konfiguriert ist, ein moduliertes Signal zu empfangen, das als die Karteninformationen moduliert ist, die anzeigen, dass sich eine Karte nahe der Stromaufnahmevorrichtung befindet.

4. Stromzuführungsvorrichtung (410) nach Anspruch 3, die ferner aufweist:
eine Stromzuführung (12, 312), die konfiguriert ist, die Spule zu betreiben, und
ein erste Umschaltkomponente (432), die konfiguriert ist, eine Verbindung mit der Spule zwischen der Stromzuführung und der ersten Kommunikationskomponente umzuschalten.

5. Stromzuführungsvorrichtung (210, 510) nach einem der Ansprüche 1 bis 4, die ferner aufweist:
eine Ausgabekomponente (215, 515), die konfiguriert ist, beruhend auf den Karteninformationen eine Benachrichtigung auszugeben.

6. Stromaufnahmevorrichtung (20, 120, 220, 320, 420, 520), die konfiguriert ist, Strom aus einer Stromzuführungsvorrichtung (10, 210, 310, 410, 510) mittels eines Magnetfelds zuzuführen, wobei die Stromaufnahmevorrichtung aufweist:
einen Stromaufnehmer (24, 324), der konfiguriert ist, das Magnetfeld aufzunehmen;
eine Spule (21, 321), die konfiguriert ist, beruhend auf ein Resonanzfrequenz einer Karte (40) ein Signal zu übertragen; und
eine zweite Kommunikationskomponente (26, 326), die konfiguriert ist, mit der Stromzuführungsvorrichtung zu kommunizieren,
**dadurch gekennzeichnet, dass**:
die Stromaufnahmevorrichtung ferner aufweist:
einen Impedanzdetektor (27), der konfiguriert ist, beruhend auf einer Änderung einer Impedanz der Spule zu detektieren, ob sich die Karte nahe der Stromaufnahmevorrichtung befindet; und
die zweite Kommunikationskomponente konfiguriert ist, Karteninformationen zur Stromzuführungsvorrichtung zu übertragen, wobei die Karteninformationen anzeigen, ob sich die Karte nahe der Stromaufnahmevorrichtung befindet.

7. Stromaufnahmevorrichtung (320, 420, 520) nach Anspruch 6, wobei
die zweite Kommunikationskomponente (326) konfiguriert ist, das Signal der Resonanzfrequenz der Karte beruhend auf den Karteninformationen zu modulieren.

8. Stromaufnahmevorrichtung nach Anspruch 6 oder 7, die ferner aufweist:
eine Kommunikationssteuereinrichtung (25a, 325a), die konfiguriert ist, die Ausgabe der zweiten Kommunikationskomponente beruhend auf den Karteninformationen einzuschränken.

9. Stromaufnahmevorrichtung (120, 420) nach einem der Ansprüche 6 bis 8, die ferner aufweist:
eine zweite Umschaltkomponente (122, 422), die konfiguriert ist, eine Verbindung mit der Spule zwischen dem Stromaufnehmer und der zweiten Kommunikationskomponente umzuschalten.

10. Stromaufnahmevorrichtung nach einem der Ansprüche 6 bis 9, wobei die Spule konfiguriert ist, das Signal intermittierend zu übertragen.

11. Stromaufnahmevorrichtung nach einem der Ansprüche 6 bis 10, die ferner aufweist:
eine wiederaufladbare Batterie (25d, 325d), die konfiguriert ist, beruhend auf dem durch den Stromaufnehmer aufgenommenen Magnetfeld geladen zu werden.

## Revendications

1. Dispositif d'alimentation électrique (10, 210, 310, 410, 510) prévu pour alimenter en courant le dispositif de réception d'énergie (20, 120, 220, 320, 420, 520) au moyen d'un champ magnétique, ledit dispositif d'alimentation électrique comprenant :
une bobine (13, 313) prévue pour générer le champ magnétique ;
un premier composant de communication (16, 315) prévu pour communiquer avec le dispositif de réception d'énergie ; et un dispositif de commande (14, 314) prévu pour commander la génération du champ magnétique, **caractérisé en ce que** :
le premier composant de communication est prévu pour recevoir des informations de carte du dispositif de réception d'énergie, lesdites informations de carte indiquant si une carte (40) est à proximité ou non du dispositif de réception d'énergie ; et
le dispositif de commande est prévu pour commander la génération du champ magnétique sur la base des informations de carte.

2. Dispositif d'alimentation électrique selon la revendication 1, où
le dispositif de commande est prévu pour empêcher la génération du champ magnétique quand le premier composant de communication a reçu les informations de carte indiquant qu'une carte est à proximité du dispositif de réception d'énergie.

3. Dispositif d'alimentation électrique (310, 410, 510) selon la revendication 2, où
le premier composant de communication (312) est prévu pour recevoir un signal modulé si les informations de carte indiquent qu'une carte est à proximité du dispositif de réception d'énergie.

4. Dispositif d'alimentation électrique (410) selon la revendication 3, comprenant en outre
un module d'alimentation en énergie (12, 312) prévu pour entraîner la bobine, et
un premier composant de commutation (432) prévu pour commuter une connexion à la bobine entre le module d'alimentation en énergie et le premier composant de communication.

5. Dispositif d'alimentation électrique (210, 510) selon l'une des revendications 1 à 4, comprenant en outre
un composant de sortie (215, 515) prévu pour émettre une notification sur la base des informations de carte.

6. Dispositif de réception d'énergie (20, 120, 220, 320, 420, 520) prévu pour être alimenté en énergie par le dispositif d'alimentation électrique (10, 210, 310, 410, 510) au moyen d'un champ magnétique, ledit dispositif de réception d'énergie comprenant :
un récepteur d'énergie (24, 324) prévu pour recevoir le champ magnétique ;
une bobine (21, 321) prévue pour transmettre un signal sur la base d'une fréquence de résonance d'une carte (40) ; et
un deuxième composant de communication (26, 326) prévu pour communiquer avec le dispositif d'alimentation électrique, **caractérisé en ce que** :
ledit dispositif de réception d'énergie comprend en outre un détecteur d'impédance (27) prévu pour détecter si la carte est ou non à proximité du dispositif de réception d'énergie sur la base d'une variation d'impédance de la bobine ; et
le deuxième composant de communication est prévu pour transmettre des informations de carte au dispositif d'alimentation électrique, lesdites informations de carte indiquant si la carte est ou non à proximité du dispositif de réception d'énergie.

7. Dispositif de réception d'énergie (320, 420, 520) selon la revendication 6, où
le deuxième composant de communication (326) est prévu pour moduler le signal de la fréquence de résonance de la carte sur la base des informations de carte.

8. Dispositif de réception d'énergie selon la revendication 6 ou la revendication 7, comprenant en outre
un dispositif de commande de communication (25a, 325a) prévu pour limiter une sortie du deuxième composant de communication sur la base des informations de carte.

9. Dispositif de réception d'énergie (120, 420) selon l'une des revendications 6 à 8, comprenant en outre
un deuxième composant de commutation (122, 422) prévu pour commuter une connexion à la bobine entre le récepteur d'énergie et le deuxième composant de communication.

10. Dispositif de réception d'énergie selon l'une des revendications 6 à 9, où la bobine est prévue pour transmettre le signal de manière intermittente.

11. Dispositif de réception d'énergie selon l'une des revendications 6 à 10, comprenant en outre
une batterie rechargeable (25d, 325d) prévue pour être chargée sur la base du champ magnétique reçu par le récepteur d'énergie.
